# EUROPÄISCHE PATENTSCHRIFT

(11) **EP 0 782 694 B1**
(45) Veröffentlichungstag und Bekanntmachung des Hinweises auf die Patenterteilung: **04.08.1999**
(21) Anmeldenummer: 95933402.0
(22) Anmeldetag: 18.09.1995
(51) Int. Cl.: G01C 9/28

(54) **WASSERWAAGE**
SPIRIT LEVEL
NIVEAU A BULLE

(30) Priorität: 22.09.1994 CH 288594
(43) Veröffentlichungstag der Anmeldung: 09.07.1997
(73) Patentinhaber: Baumann, Urs, 8355 Aadorf (CH)
(72) Erfinder: Baumann, Urs, 8355 Aadorf (CH)
(74) Vertreter: Behrmann, Niels, Dipl.-Ing.
(86) Internationale Anmeldenummer: EP9503693
(87) Internationale Veröffentlichungsnummer: WO9609521

(56) Entgegenhaltungen:
- DE-A- 3 526 018
- US-A- 2 752 692

## Beschreibung

Die Erfindung betrifft eine Wasserwaage nach dem Oberbegriff des Patentanspruches 1.

Eine solche gattungsgemäße Wasserwaage ist aus der US-A-2 752 692 bekannt. Aus der DE-A-35 26 018 ist eine Wasserwaage mit einem Paar um eine Drehachse gegeneinander verschwenkbarer, langgestreckter und eine Meßeinrichtung aufweisender Arme zum Aufsetzen auf eine Ebene und zum Erfassen einer Neigung derselben bekannt.

Wasserwaagen haben ein weites Einsatzgebiet -- beispielsweise in der Bautechnik und im Maschinenbau -- und dienen zur Prüfung der Lage senkrechter und waagerechter Teile.

Eine konventionelle Wasserwaage besteht aus einer Holz- oder Metalleiste mit i.w. rechteckförmigem Querschnitt, die mit mindestens einer Libelle versehen ist. Als Libelle wird im folgenden eine leicht gekrümmte Glasröhre (Röhrenlibelle) oder eine Glasdose mit leicht sphärischem Deckel (Dosenlibelle) verstanden, die bis auf eine Gasblase mit Alkohol, Äther oder einer anderen Flüssigkeit gefüllt sind. Bei horizontaler Lage der Libelle befindet sich diese Gasblase genau in deren Mitte.

Mit derartigen, aus lediglich einer Leiste bestehenden Wasserwaagen kann nur die Neigung in einer Richtung (d.h. eindimensional) bestimmt werden, wodurch ein Ausrichten von Ebenen bzw. Flächen -- beispielsweise einer Tischplatte -- problematisch werden kann. Mit den vorbeschriebenen konventionellen Wasserwaagen behilft man sich in einem solchen Fall dadurch, daß zuerst die Neigung der Ebene in einer ersten Richtung, und daraufhin die Neigung in einer zweiten Richtung geprüft und eingestellt wird, wobei die erste und die zweite Richtung in der Regel senkrecht aufeinanderstehen. Ein solcher Vorgang wird aber nicht zuletzt dadurch erschwert, daß üblicherweise eine Anpassung der Neigung der Ebene bezüglich der ersten Richtung zwangsläufig auch eine Neigungsänderung in der zweiten Richtung bedingt, so daß ein Ausrichtprozeß zu einem rekursiven und langwierigen Verfahren wird, welches neben dem Zeitaufwand entsprechend wenig genau ist.

Aus dem Stand der Technik sind nun Wasserwaagen bekannt, die eine zweidimensionale Neigungsbestimmung -- d.h. bezogen auf eine Ebene -- ermöglichen.

So weist die gattungsbildende DE 35 26 018 Al einen langgestreckten, querschnittlich rechteckförmigen Grundkörper auf, an welchem ein kleinerer Ausleger mittig schwenkbar angeordnet ist. Im ausgeschwenkten Zustand des Auslegers ist somit eine zweidimensionale Neigungsbestimmung möglich.

Allerdings ist diese Wasserwaage nach dem Stand der Technik nicht nur konstruktiv aufwendig und nachteilig -- der Ausleger muß präzise fluchtend zur Aufnahme in einer entsprechenden Ausnehmung des Grundkörpers ausgebildet sein, und die Herstellung der Schwenk- bzw. Gelenkachse gestaltet sich dadurch zwangsläufig aufwendig bzw. fehlerträchtig -- sondern auch im Hinblick auf Genauigkeit und weitere Meßeigenschaften ist diese bekannte Wasserwaage nachteilig: Die vollständige Aufnahme des schwenkbaren Auslegers in die zugehörige Ausnehmung im Grundkörper bedingt notwendigerweise, daß die Wasserwaage entlang des Grundkörpers eine größere Länge aufweist als der Ausleger. Da aber die Meßgenauigkeit einer Wasserwaage vom Abstand einer am Ende eines Armes vorgesehenen Libelle zum Mittelpunkt beeinflußt wird, ist die gattungsgemäß bekannte Wasserwaage mit jeweils endseitig -- und somit mit in verschiedenen Abständen zur Achsenmitte angeordneten -- Libellen hinsichtlich ihrer Meßgenauigkeit zwischen den Armen ungenau und somit zwangsläufig nachteilig.

Ferner erlaubt die gattungsbildende Wasserwaage offensichtlich ein Aufsetzen lediglich auf einer durchgehenden Ebene, denn durch die fast vollständig entlang der Unterseite des Grundkörpers gebildete Ausnehmung für den Ausleger muß die Wasserwaage an beiden Endabschnitten des Grundkörpers auf die unterliegende Ebene aufgesetzt werden, so daß überhaupt gemessen werden kann. Ist aber beispielsweise die Neigung einer Ebene bzw. einer Fläche festzustellen, die hinsichtlich ihrer Abmessungen geringer ist als der Abstand der Endabschnitte des Grundkörpers, so ist die gattungsbildende Wasserwaage für diesen Einsatz ungeeignet.

Ferner ist aus der FR 2 613 475 eine Wasserwaage bekannt, die aus einer sternförmigen Anordnung von drei, jeweils in einem Winkel von 120° starr zueinanderstehenden Winkeln gebildet ist. Neben dem erhöhten konstruktions- und fertigungstechnischen Aufwand, den die Herstellung einer solchen Vorrichtung mit sich bringt, ist eine solche Wasserwaage allein schon deswegen nachteilig, als sie nur schwer räumlich unterzubringen ist und insbesondere in eine Werkzeugkiste od.dgl. nicht ohne weiteres hineinpaßt. Entsprechend ist ein mobiler und flexibler Einsatz vor Ort sind mit einem solchen Gerät deutlich erschwert.

Aufgabe der vorliegenden Erfindung ist es daher, eine Wasserwaage nach dem Oberbegriff des Patentanspruches 1 zu schaffen, deren Einsatzmöglichkeiten erweitert und flexibilisiert sind, die zudem einfach und großserientauglich herzustellen ist, und die nur einen geringen Platzbedarf aufweist.

Die Aufgabe wird durch die Wasserwaage mit den Merkmalen des Patentanspruches 1 gelöst.

Vorteilhaft ermöglichen dabei die gegeneinander im Bereich der jeweiligen Kröpfung verschwenkbaren Arme -- die jeweils einen ersten und einen zweiten, durch die starre Kröpfung verbundenen Längsabschnitt aufweisen -- ein platzsparendes und einfaches Zusammenlegen, und bieten trotzdem durch die i.w. gleiche Längenbemessung der jeweiligen Längsabschnitte der Arme die Voraussetzung für eine im auseinandergeschwenkten Zustand in jeder Richtung gleich genaue, zweidimensionale Messung. Gleichzeitig ist sichergestellt, daß sowohl im zusammengelegten Zustand, als auch bei jedem Verschwenkungswinkel zwischen den Armen stets durchgehender Kontakt mit einer unterliegenden Fläche herrscht, so daß die erfindungsgemäße Wasserwaage sich für eine Messung beliebiger Ebenen -- durchgehender Platten, Wannen bzw. Rändern usw. -- beliebiger Abmessungen eignet.

Vorteilhafte Weiterbildungen der Erfindung sind in den Unteransprüchen beschrieben.

So führt die gleiche Ausbildung der ersten und der zweiten Längen gemäß Patentanspruch 2 zu einer vollkommenen Symmetrie, die -- beispielsweise zum Herstellen eines hochpräzisen Meßinstrumentes -- an jedem Ende eines Armes das Vorsehen einer Libelle gestattet und so in jeder Meßrichtung zwei, jeweils in einem konstanten Abstand beabstandete Meßeinrichtungen tragen kann.

Besonders bevorzugt entspricht die Breite der Längsabschnitte jedes Armes dem durch die Kröpfung erzeugten Versatz (d.h. dem Abstand der Längsachse des ersten Längsabschnittes bezogen auf die Längsachse des zugehörigen zweiten Längsabschnittes in einer Ebene), so daß die Voraussetzung dafür geschaffen wird, daß beide Arme zum Verschwenken ineinander steckbar sind und die gesamte Anordnung im zusammengeklappten bzw. -gefalteten Zustand lediglich eine Gesamtbreite aufweist, die zwei aneinandergelegten Armen entspricht. Auf diese Weise ist eine Wasserwaage herstellbar, die ein Minimum an Platz benötigt.

Besonders geeignet wird jeder Arm im Bereich der Kröpfung mit einer Ausnehmung versehen, die so bemessen ist, daß die Kröpfung des jeweils anderen Armes in diese hineinpaßt.

Fertigungstechnisch besonders vorteilhaft weisen beide Arme dieselbe Außenform auf, so daß diese -- besonders bevorzugt zusätzlich einstückig ausgebildet -- im Wege beispielsweise eines Spritzgußverfahrens durch dasselbe Spritzwerkzeug realisiert werden können. Obwohl die erfindungsgemäße Wasserwaage eine Präzisionswerkzeug ist, kann daher so Weise eine vergleichsweise kostengünstige Herstellung erreicht werden.

Gemäß einer weiteren bevorzugten Weiterbildung der Erfindung ist mindestens einer der Arme entlang seiner Längsrichtung zur Aufnahme eines Verlängerungsstückes od.dgl. teilbar ausgebildet, und/oder weist endseitig eine Einrichtung auf, mit welcher der Arm, beispielsweise durch eine herkömmliche Wasserwaage, zusätzlich verlängert werden kann. Ein möglicher Einsatzbereich für eine solche Weiterbildung wäre das Vermessen bzw. Justieren eines Rahmens bzw. eines umlaufenden Randes, dessen Abmessungen größer als die der Wasserwaage im nicht verlängerten Zustand sind. Durch Einfügen bzw. Ansetzen entsprechender Verlängerungen kann dann aber ein entsprechend großer Innenraum einer Wanne oder eines Rahmens überbrückt werden.

Während die erfindungsgemäße Wasserwaage -- wie im herkömmlichen Fall -- massiv oder als Hohlprofil mit i.w. rechteckigem Querschnitt ausgestaltet sein kann, hat es sich als besonders vorteilhaft erwiesen, zumindest die Längsabschnitte der Arme durch ein einfaches U- oder ein doppeltes T-Profil zu realisieren. Eine solche Ausbildung als Profil ist dabei nicht nur im Hinblick auf eine einfache und kostengünstige Fertigung vorteilhaft, sondern ermöglicht ein weitgehend verwindungssteifes und formtreues Herstellen der Arme -- ist mithin also für ein genaues und zuverlässiges Meßgerät wie die erfindungsgemäße Wasserwaage besonders geeignet.

Gemäß einer weiteren bevorzugten Weiterbildung sind die gegeneinander verschwenkbaren Arme in vorbestimmten Abständen -- beispielsweise 45° oder 90° -- zueinander rastbar, so daß im praktischen Einsatz eine versehentliche Verstellung ausgeschlossen werden kann. Besonders bevorzugt ist ferner die erfindungsgemäße Wasserwaage im Bereich der Drehachse zwischen den zu verschwenkenden Armen mit einer Dosenlibelle und/oder einer Gradeinteilung als Meßvorrichtung für einen eingestellten Winkel zwischen den Armen versehen.

Die erfindungsgemäße Wasserwaage ist -- je nach konkretem Anwendungsgebiet -- beliebig mit Libellen zur Horizontal- oder Vertikalmessung versehbar, die bevorzugt in entsprechende Aussparungen der Arme einsetzbar sind. Besonders geeignet können die Arme zusätzlich mit einer Höhenmeßeinrichtung und/oder einer Längenmeßeinrichtung -- beispielsweise einer aufgedruckten Längenteilung -- versehen sein. Die verschiedenen vorteilhaften Ausbildungen der Arme mit großflächigen Außenflächen gestatten zusätzlich vorteilhaft das Versehen der erfindungsgemäßen Wasserwaage mit Firmenkennzeichnungen, Werbeaufdrucken, Bedienungshinweisen od.dgl.

Selbstverständlich können anstelle der bekannten Röhren- und/oder Dosenlibellen auch elektronische Lagesensoren, beispielsweise mit einer Digitalanzeige, eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in
- Fig. 1:: eine perspektivische Darstellung der Wasserwaage gemäß einer ersten Ausführungsform;
- Fig. 2:: eine Draufsicht auf die Wasserwaage gemäß Fig. 1;
- Fig. 3:: eine perspektivische Darstellung des Gelenkstückes der Wasserwaage gemäß Fig. 1;
- Fig. 4:: eine Seitenansicht eines Schenkels des Gelenkstückes einer Wasserwaage gemäß Fig. 1 mit zwei aufgesteckten Armen;
- Fig. 5:: einen Längsschnitt durch einen Endabschnitt eines Armes, welcher auf einen Schenkel des Gelenkstückes gemäß Fig. 3 aufgesteckt ist;
- Fig. 6:: eine Exposionsdarstellung eines Armes einer Wasserwaage der ersten Ausführungsform mit einem Verlängerungsstück;
- Fig. 7a:: eine perspektivische Darstellung einer Wasserwaage gemäß der ersten Ausführungsform, welche mit einem aufrollbaren Meßband ausgerüstet ist;
- Fig. 7b:: eine perspektivische Darstellung einer Wasserwaage gemäß der ersten Ausführungsform, welche mit einem elektronischen Distanzmeßgerät ausgerüstet ist;
- Fig. 8:: eine perspektivische Darstellung eines Gelenkstückes einer Wasserwaage gemäß einer zweiten Ausführungsform;
- Fig. 9:: eine Seitenansicht eines Schenkels von einem Gelenkstück einer Wasserwaage gemäß der zweiten Ausführungsform, an welchem zwei herkömmliche Wasserwaagen befestigt sind;
- Fig. 10:: eine perspektivische Darstellung einer Wasserwaage gemäß der zweiten Ausführungsform;
- Fig. 11:: eine Aufsicht einer Wasserwaage gemäß Fig. 10;
- Fig. 12:: eine perspektivische Darstellung einer Wasserwaage gemäß der dritten Ausführungsform;
- Fig. 13:: eine Aufsicht einer Wasserwaage gemäß Fig. 12;
- Fig. 14:: eine Seitenansicht eines Schenkels einer Wasserwaage gemäß Fig. 13.

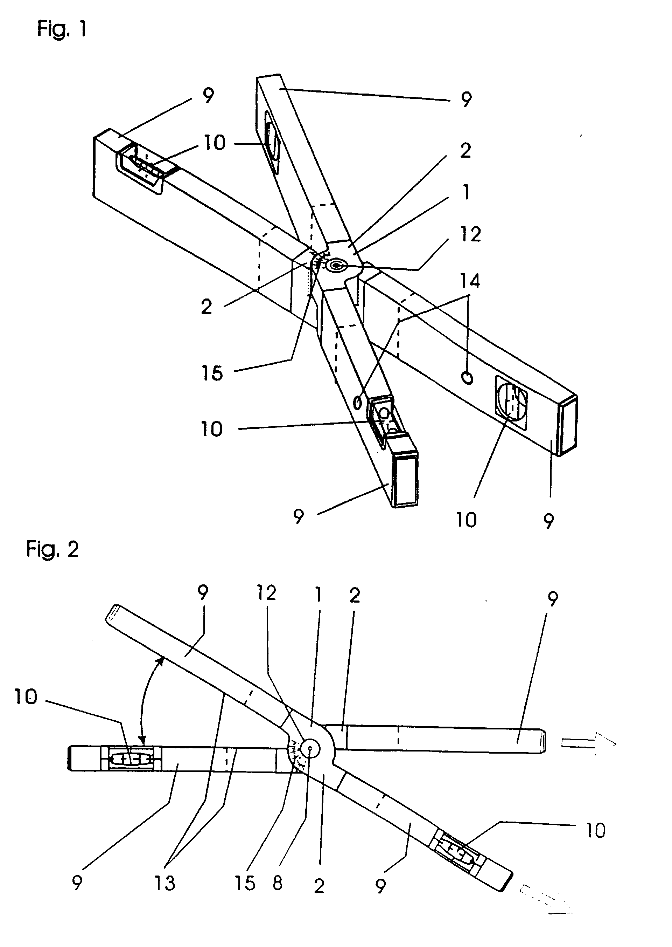

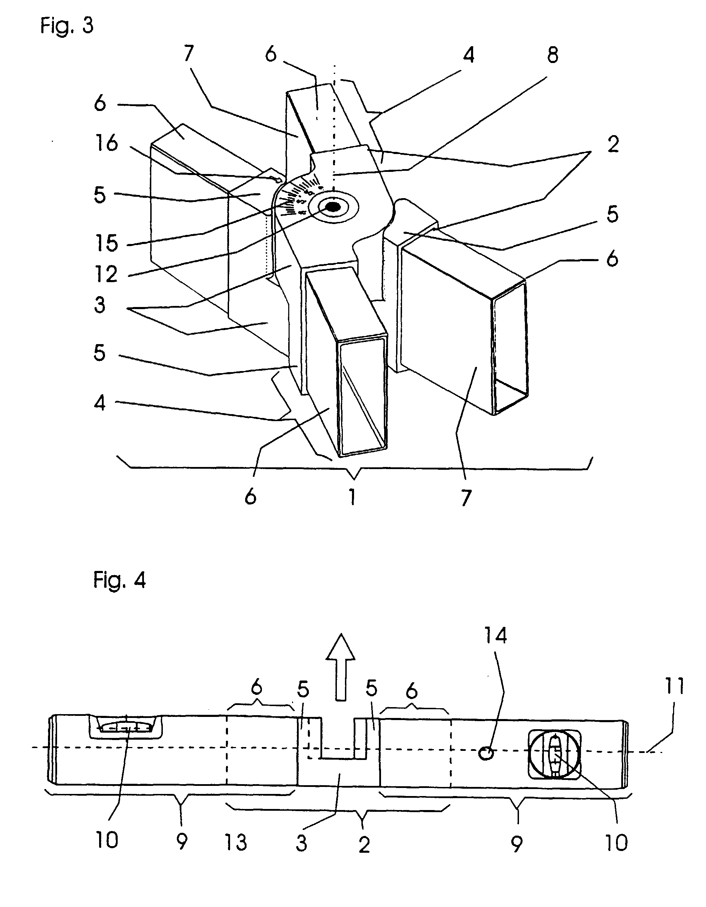

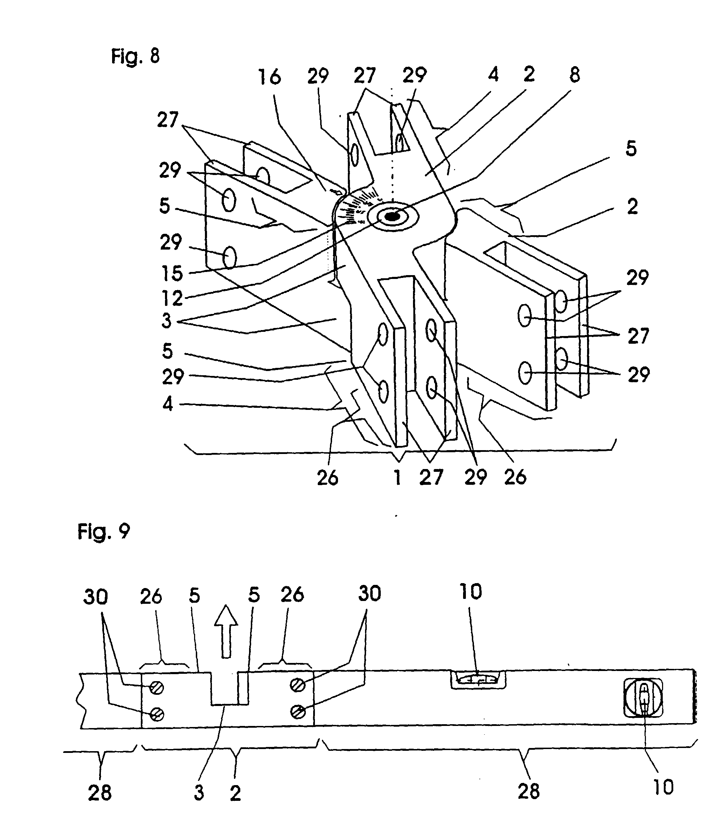

Das zentrale Gelenkstück 1 der Wasserwaage setzt sich aus zwei sich kreuzenden Schenkeln 2 zusammen (vgl. Fig. 3). Jeder dieser Schenkel 2 gliedert sich in einen mittleren Gelenkabschnitt 3 mit einem annähernd kreisförmigen Grundriss und in zwei äußere Verbindungsabschnitte 4. Die beiden Verbindungsabschnitte 4 eines Schenkels 2 verlaufen parallel zueinander. Sie sind gegeneinander um die Breite eines Verbindungsabschnittes 4 seitlich versetzt. Die Innenflächen 7 der beiden Verbindungsabschnitte 4 eines Schenkels 2 liegen auf einer gemeinsamen Ebene, welche durch die Gelenkachse 8 verläuft (vgl. Fig. 2, 11 und 13). Mindestens einer der beiden Schenkel 2 trägt an der äußeren Stirnseite seines Gelenkabschnittes 3 eine Dosenlibelle, welche das Prüfen der Neigung einer Ebene in allen Richtungen ermöglicht (vgl. Fig. 3 und 8).

Die Schenkel 2 des Gelenkstückes 1 sind vorzugsweise aus Aluminium oder aus Kunststoff gefertigt.

Zur Messung von Winkeln bezüglich der Vertikalen oder Horizontalen befindet sich auf der äußeren Stirnseite von mindestens einem der Schenkel 2 des Gelenkstückes 1 eine Meßskala 15 mit Winkeleinteilung (vgl. Fig. 3). Die Meßskala 15 erstreckt sich über mindestens 90°. Der Verbindungsabschnitt 4, welcher direkt an die Meßskala 15 angrenzt, ist mit einer Markierung 16 versehen, welche auf den jeweils gültigen Meßwert der Skala 15 zeigt.

Bei der Wasserwaage der ersten Ausführungsform gliedert sich jeder Verbindungsabschnitt 4 wiederum im einen dem Gelenkabschnitt 3 zugewandten Führungsabschnitt 5 und einen dem Gelenkabschnitt 3 abgewandten Steckabschnitt 8 (vgl. Fig. 3). Der Führungsabschnitt 5 weist einen annähernd trapezförmigen Grundriß und einen rechteckförmigen Seitenriß auf. Die Steckabschnitte 6 sind als Hohlprofile mit rechteckförmigem Grundriß und Seitenriß ausgebildet.

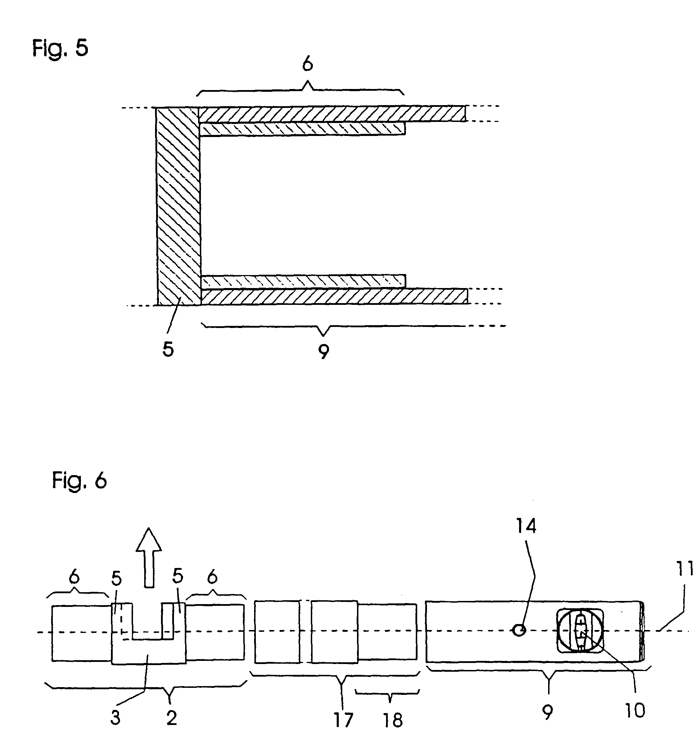

Jeder Arm 9 einer Wasserwaage der ersten Ausführungsform wird durch ein Hohlprofil mit rechteckförmigem Querschnitt gebildet. Das Hohlprofil kann aus Aluminium oder aus Kunststoff bestehen. Auf jeden Steckabschnitt 6 der Schenkel 2 ist je einer der vier Arme 9 aufgesteckt (vgl. Fig. 4). Dies wird dadurch ermöglicht, daß der Innenquerschnitt des Hohlprofils eines Armes 9 dem Außenquerschnitt des Steckabschnittes 6 der Schenkel 2 entspricht. Das Hohlprofil eines Armes 9 kann also in seinem Innenraum einen Steckabschnitt 6 eines Schenkels 2 vollständig aufnehmen (vgl. Fig. 5). Die Arme 9 können an den Steckabschnitten 6 zusätzlich mit mindestens einer Schraube fixiert sein (nicht gezeigt).

Die äußere Stirnseite der Arme 9 ist geschlossen. Zwei der vier Arme 9 weisen in ihrem äußeren Endabschnitt an ihrer Oberseite eine Aussparung mit rechteckigem Seitenriß auf. Jede dieser Aussparungen nimmt eine Röhrenlibelle auf, deren Rohr parallel zur Längsachse 11 des entsprechenden Armes 9 verläuft. Diese Röhrenlibellen 10 dienen zur Prüfung einer horizontalen Ebene. Die Horizontalmeßlibellen sind vorzugsweise an zwei Armen 9 angebracht, welche an verschiedenen Schenkeln 2 befestigt sind (vgl. Fig. 1 und 2).

Die beiden Arme 9 ohne Horizontalmeßlibellen weisen in ihrem äußeren Endabschnitt je eine durchgehende Aussparung auf, welche rechtwinkelig zu den Seitenflächen 13 des entsprechenden Armes 9 verläuft und vorzugsweise einen quadratischen Seitenriß hat. In diesen Aussparungen ist ebenfalls je eine Röhrenlibelle 10 angeordnet, deren Röhre aber rechtwinkelig zur Längsachse 11 des Armes 9 verläuft (vgl. Fig. 1 und 4). Diese Röhrenlibellen 10 dienen der Prüfung von vertikalen Ebenen.

Damit die Wasserwaage aufgehängt werden kann, sind zwei benachbarte Arme 9 mit je einer durchgehenden Bohrung 14 versehen, welche rechtwinkelig zu den Seitenflächen 13 der Arme 9 verläuft (vgl. Fig. 1 und 4). Die Bohrungen 14 liegen an sich entsprechenden Stellen der beiden Arme 9, so daß sie miteinander fluchten, wenn die Arme 9 mit ihren Seitenflächen 13 aneinanderliegen.

Bei einer bevorzugten Ausführungsform beträgt die Höhe der Wasserwaage 50 mm und ihre Breite in zusammengeschwenktem Zustand 40 mm. Es sind verschiedene Längen vorgesehen, welche im Breich von 200 bis 2000 mm liegen können.

Dank der Steckverbindung zwischen dem zentralen Gelenkstück 1 und den Armen 9 können die verschiedenen Längen durch die Verwendung von Armen 9 unterschiedlicher Länge erreicht werden. Das Gelenkstück 1 bleibt vorzugsweise unverändert.

Ferner besteht die Möglichkeit, die verschiedenen Längen mit Hilfe von Verlängerungsstücken 17 zu verwirklichen (vgl. Fig. 6). Diese Verlängerungsstücke 17 werden zwischen die Arme 9 und das Gelenkstück 1 eingefügt. Ein Verlängerungsstück 17 gliedert sich in einen Grundkörper und in einen Steckabschnitt 18. Der Grundkörper besteht aus einem Hohlprofil, welches den gleichen Querschnitt und die gleiche Wanddicke aufweist, wie das Hohlprofil der Arme 9. Der Steckabschnitt 18 besteht ebenfalls aus einem Hohlprofil, welches aber den gleichen Querschnitt und die gleiche Wanddicke wie das Hohlprofil der Steckabschnitte 18 am Gelenkstück 1 aufweist. Jedes Verlängerungsstück 17 wird mit seinem Grundkörper auf einen Steckabschnitt 18 des Gelenkstückes 1 aufgesteckt. Der Steckabschnitt 18 jedes Verlängerungsstückes 17 wird in einen Arm 9 eingesteckt.

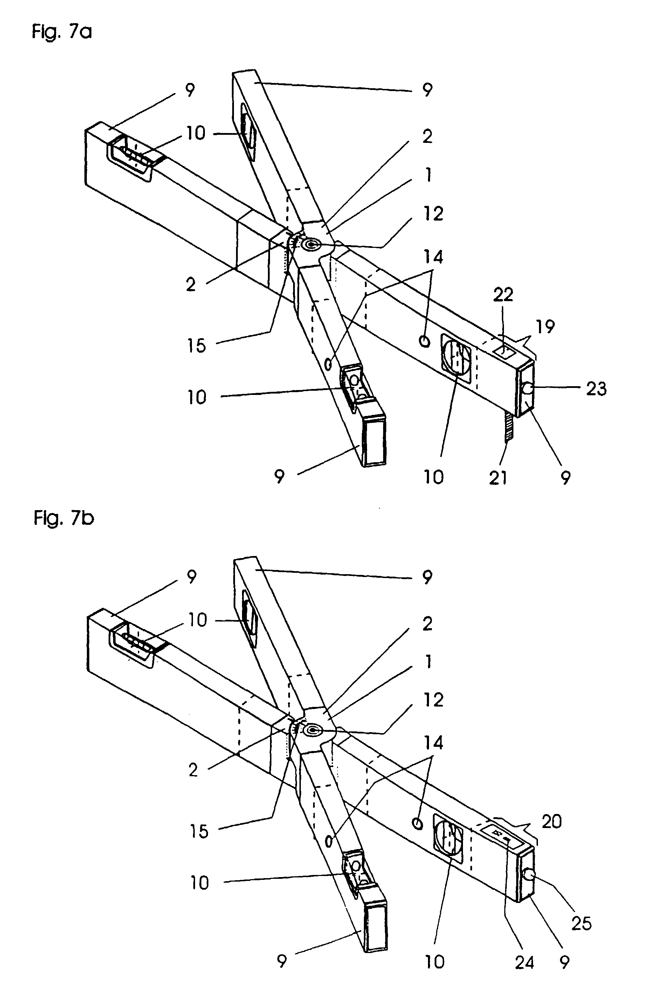

Im äußeren Endabschnitt mindestens eines Armes 9 kann eine Distanzmeßvorrichtung 19, 20 untergebracht sein (vgl. Fig. 7a und 7b).

Es kann sich dabei um eine mechanische Distanzmeßvorrichtung 19 oder um eine elektronische Ditanzmeßvorrichtung 20 handeln. In der Fig. 7a ist eine Wasserwaage mit einer mechanischen Distanzmeßvorrichtung 19 in Form eines aufrollbaren Meßbandes 21 abgebildet. Das Meßband 21 ist in zusammengerolltem Zustand bis auf einen kurzen Endabschnitt im Inneren des Armes 9 untergebracht. Es läßt sich durch eine Öffnung an einer Schmalseite des Armes 9 herausziehen. Beim Herausziehen wird eine Feder gespannt. Wenn man das Meßband 21 nicht mehr braucht, wird die Federkraft dazu verwendet, das Meßband 21 wieder im Inneren des Armes 9 aufzurollen. Der Aufrollvorgang kann mit Hilfe eines Auslöseknopfes 23 gestartet werden. Die durch die Länge des ausgezogenen Meßbandabschnittes definierte Distanz wird in einem Sichtfenster 22 angezeigt, welches an derjenigen Schmalseite angeordnet ist, die der Austrittsöffnung des Meßbandes 21 gegenüberliegt.

Die mechanische Distanzmeßvorrichtung kann auch die Form eines einfachen, aufrollbaren Meßbandes ohne Sichtfenster und Auslöseknopf haben.

Die elektronische Distanzmeßvorrichtung 20 kann beispielsweise mit Licht-, Ultraschall- oder Mikrowellen arbeiten. Diese Wellen dienen als Träger aufmodulierter Meßsignale. Nach der Reflexion am Zielpunkt wird die Entfernung aus der Signallaufzeit und der Ausbreitungsgeschwindigkeit berechnet. Solche Geräte sind aus der Meßtechnik bekannt.

Die Distanzmeßvorrichtung 20 ist vollständig im Innenraum eines Armes 9 untergebracht. Der Meßvorgang läßt sich mit einem Bedienungsknopf 25, welcher beispielsweise an der äußreen Stirnseite des entsprechenden Armes 9 angeordnet ist, auslösen. Das Meßresultat wird durch eine Anzeigevorrichtung 24, welche sich beispielsweise auf einer Schmalseite des Armes 9 befindet, angezeigt. Die Öffnung zum Durchlaß der ausgesandten bzw. reflektierenden Wellen befindet sich an der gegenüberliegenden Schmalseite. Als Stromquelle für die Distanzmeßvorrichtung 20 können Batterien dienen, welche ebenfalls im Innenraum des Armes 9 untergebracht sind.

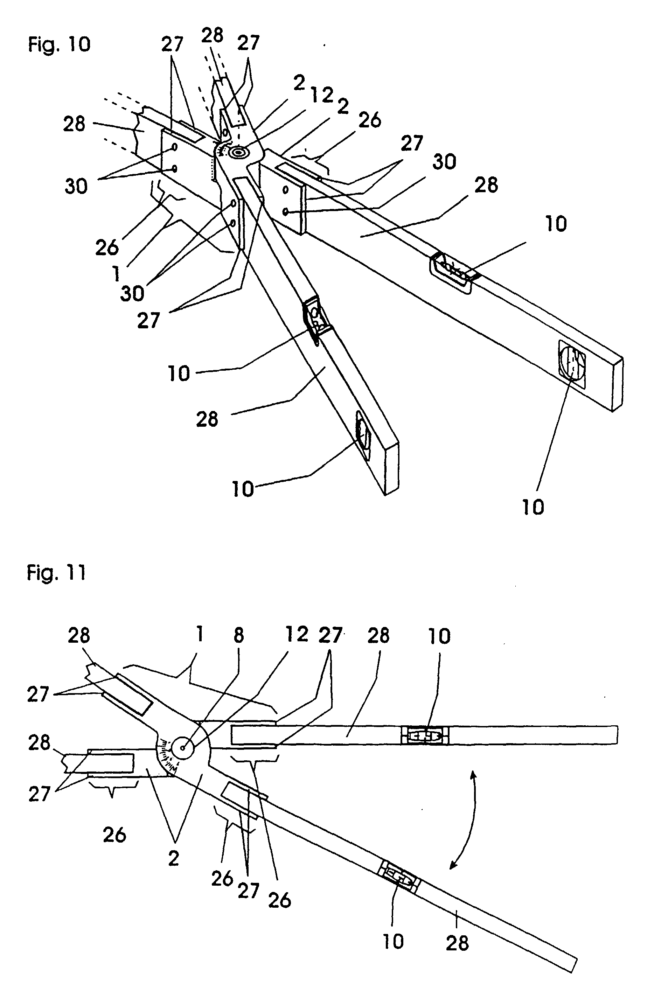

Bei der Wasserwaage der zweiten Ausführungsform gliedert sich jeder Verbindungsabschnitt 4 in einen dem Gelenkabschnitt 3 zu) gewandten Führungsabschnitt 5 und eine dem Gelenkabschnitt 3 abgewandte Befestigungsvorrichtung 26 (vgl. Fig. 8 und 11). Der Führungsabschnitt 5 ist gleich ausgebildet wie bei der Wasserwaage der ersten Ausführungsform. Mit Hilfe der Befestigungsvorrichtung 26 kann an jedem Verbindungsabschnitt 4 eine herkömmliche, leistenförmige Wasserwaage 28 derartig fixiert werden, daß eine Stirnseite der herkömmlichen Wasserwaage 28 der äußeren Stirnseite des Verbindungsabschnittes 4 zugewandt ist und die Mittenlängsachsen der herkömmlichen Wasserwaage 28 und des Verbindungsabschnittes 4 aufeinanderliegen. Die Befestigungsvorrichtung 26 kann beispielsweise die Form zweier Befestigungsplatten 27 haben, welche rechtwinkelig von der Stirnseite des Führungsabschnittes 5 abstehen (vgl. Fig. 8). Die äußere Seitenfläche jeder Befestigungsplatte 27 ist mit einer der beiden Seitenflächen des Führungsabschnittes 5 bündig, und die beiden Befestigungsplatten 27 haben voneinander einen gewissen Abstand. In den Zwischenraum zwischen den beiden Befestigungsplatten 27 ist von der äußeren Stirnseite her der Endabschnitt einer herkömmlichen Wasserwaage 28 eingefügt (vgl. Fig. 10 und 11). Jede Befestigungsplatte 27 ist mit zwei runden Bohrungen 29 versehen. Die Bohrungen 29 der beiden Befestigungsplatten 27 einer Befestigungsvorrichtung 26 fluchten paarweise miteinander. Der Endabschnitt der herkömmlichen Wasserwaage 28 ist ebenfalls mit zwei durchgehenden Querbohrungen versehen (nicht gezeigt). Bei eingefügtem Endabschnitt fluchtet jede dieser Bohrungen mit je einer Bohrung 29 der beiden Befestigungsplatten 27. Die herkömmliche Wasserwaage 28 wird nun an der Befestigungsvorrichtung 26 fixiert, indem quer durch die jeweils miteinander fluchtenden Bohrungen der Befestigungsplatten 27 und des Wasserwaagenendabschnittes eine Schraube 30, ein Bolzen oder ein Splint hindurchgesteckt wird (vgl. Fig. 9 bis 11).

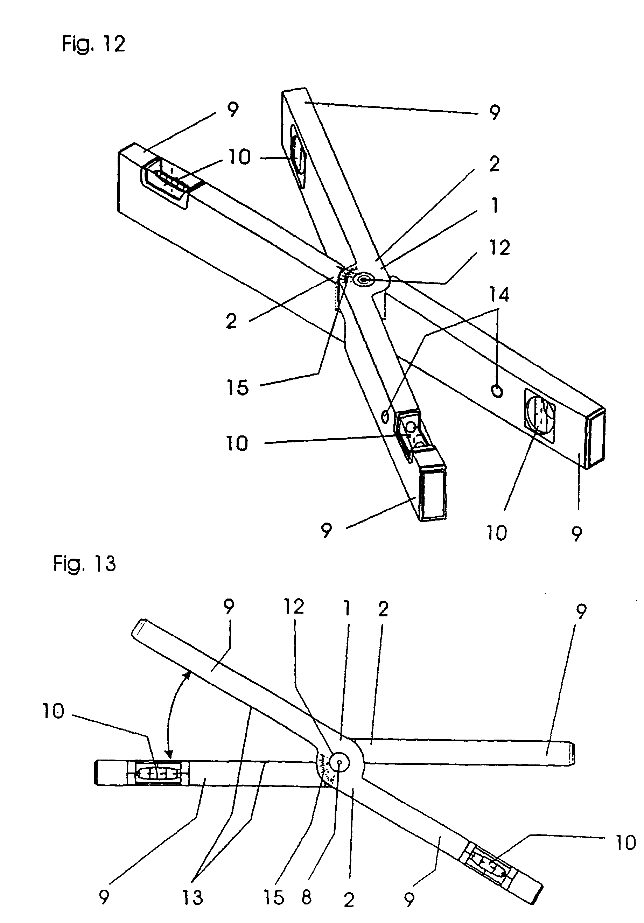

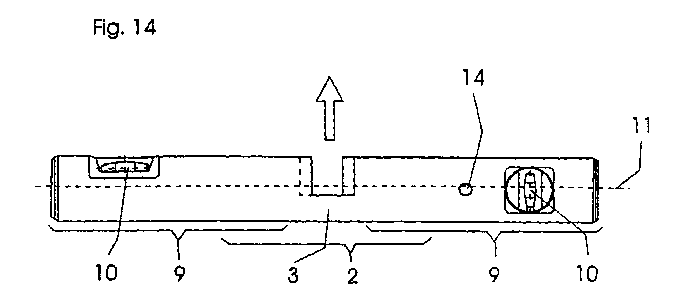

Schließlich ist noch eine dritte Ausführungsform vorgesehen, welche sich von der ersten Ausführungsform dadurch unterscheidet, daß in vereinfachender Weise die Arme 9 nicht mit Steckverbindungen an den Schenkeln 2 des Gelenkstückes 1 befestigt sind, sondern mit diesen eine zusammenhängende Einheit bilden. Jeweils zwei parallele Arme 9 sind also zusammen mit dem dazwischenliegenden Schenkel 2 des Gelenkstückes 1 aus einem Stück gefertigt (vgl. Fig. 12 bis 14). Diese Ausführungsform wird als Art und Weise der Ausführung der Erfindung angesehen.

Im weiteren kann die Wasserwaage der dritten Ausführungsform ebenfalls mit mechanischen oder elektronischen Distanzmeßvorrichtungen 19, 20 ausgerüstet sein (nicht gezeigt).

Sowohl bei der Wasserwaage der ersten als auch bei der Wasserwaage der dritten Ausführungsform besteht die Möglichkeit, anstelle der Röhren- und Dosenlibellen elektronische Lagesensoren mit Digitalanzeige zu verwenden (nicht gezeigt).

Gemäß einer alternativen Ausbildung der oben beschriebenen Ausführungsform ist es möglich, die Arme der Wasserwaage querschnittlich als U- bzw. Doppel-T-Profile auszubilden. Eine solche Ausbildung -- insbesondere wenn Aluminium im Druckgußverfahren verwendet wird -- vereinfacht die Herstellung und gestattet eine präzise und abmessungsgenaue Ausbildung der Oberflächen. Diese Ausbildung der Arme als U- bzw. als Doppel-T-Profil ist in den Figuren nicht gezeigt.

Gemäß einer weiteren bevorzugten Weiterbildung der Erfindung können alle drei vorbeschriebenen Ausführungsformen im Gelenkstück 1 mit einer -- nicht gezeigten -- Rastung versehen sein, die in vorbestimmten Winkelabständen, beispielsweise 30°, 45°, oder 90°, das Arretieren bzw. Einrasten der gegeneinander verschwenkten Arme in diesen vorbestimmten Winkel ermöglicht und so ein unbeabsichtigtes Verstellen beim Benutzen verhindert.

Gemäß noch einer weiteren bevorzugten Weiterbildung wird die Lagerung im Gelenkstück 1 mittels eines zur Gelenkachse parallelen, axialen Nadellagers realisiert. Auf diese Weise ist eine besonders präzise Lagerung der Arme aneinander erreichbar. Ferner kann bevorzugt das Gelenkstück mittels eines Silikonringes od.dgl. wasserdicht abgedichtet werden, so daß die erfindungsgemäße Wasserwaage auch in feuchter Umgebung ohne Korrosionsgefahr benutzt werden kann.

Die vorgeschlagene Wasserwaage wird auf die folgende Art und Weise eingesetzt bzw. benutzt:

Zur Prüfung einer Ebene werden die Arme 9 der Wasserwaage auseinandergeschwenkt. Der ideale Öffnungswinkel richtet sich dabei nach der Größe der zu prüfenden Ebene.

Danach wird die Wasserwaage auf die zu prüfende horizontale oder vertikale Ebene aufgesetzt. Die Ebene läßt sich nun mit Hilfe der beiden Horizontal- bzw. Vertikalmeßlibellen gleichzeitig in zwei Richtungen adjustieren.

Wenn man gleichzeitig noch die Distanz der zu prüfenden Ebene in bezug auf eine zweite Ebene oder einen Fixpunkt bestimmen will, dann legt man die Wasserwaage derartig auf die zu prüfende Ebene, daß derjenige Armendabschnitt, welcher die Distanzmeßvorrichtung 19, 20 enthält über den Rand der Ebene vorsteht. Die Distanzmessung kann nun durch Ausziehen des Meßbandes 21 bzw. durch das Auflösen des elektronischen Meßvorganges durchgeführt werden.

Im weiteren kann die Wasserwaage dazu verwendet werden, eine rechteckförmige Platte gleichzeitig in der Vertikalen als auch in der Horizontalen auszurichten. Dafür wird die Wasserwaage in einem Winkel von 90° geöffnet. Einer der Arme 9 mit einer Horizontalmeßlibelle wird dann an die obere, horizontale Schmalseite der Platte und einer der Arme 9 mit einer Vertikalmeßlibelle wird an eine vertikale Schmalseite angelegt. Die Schmalseiten lassen sich nun mit Hilfe der Wasserwaage gleichzeitig horizontal bzw. vertikal adjustieren.

Es ist zudem möglich, mit der Wasserwaage Winkel bis zu 90° bzw. Ergänzungswinkel bis zu 180° zu messen. So lassen sich auch bezüglich der Vertikalen und Horizontalen geneigte Ebenen in einem gewünschten Neigungswinkel adjustieren. Dank der Winkelmeßvorrichtung läßt sich die vorgeschlagene Wasserwaage auch für das Messen von Winkeln einsetzen.

Das korrekte Justieren der Wasserwaage läßt sich einfach überprüfen, indem die Wasserwaage auf eine wissentlich horizontale oder vertikale Ebene aufgesetzt und dann überprüft wird, ob sich die Blasen der Horizontal- bzw. Vertikalmeßlibellen im Zentrum des Rohres bzw. der Dose befindet.

Die vorgeschlagene Wasserwaage weist gegenüber den bekannten Wasserwaagen die folgenden Vorteile auf:

Sie ist einfach und trotzdem stabil aufgebaut. Sie ermöglicht das Prüfen der Neigung sowohl von horizontalen als auch von vertikalen Ebenen in zwei Richtungen. Ferner können mit der vorgeschlagenen Wasserwaage rechteckförmige Platten, wie z.B. Verschalungsplatten oder Platten für Außenisolationen von Gebäuden, gleichzeitig vertikal und horizontal ausgerichtet werden. Zusätzlich erlaubt sie auch das Messen von Winkeln und das Adjustieren von Ebenen, welche bezüglich der Vertikalen bzw. der Horizontalen geneigt sind. Außerdem kann mit ihr nicht nur die Lage einer Ebene bezüglich der Vertikalen oder Horizontalen, sondern auch ihr Abstand von einer Bezugsebene oder von einem Bezugspunkt überprüft werden.

Diese Vielzahl von Funktionen wird von keiner der bekannten Wasserwaagen erreicht.

Der besondere Vorteil der ersten Ausführungsform besteht in der Gliederung der Wasserwaage in ein zentrales Gelenkstück 1 und vier Arme 9, welche mit einer Steckverbindung aneinander befestigt sind. Dadurch besteht die Möglichkeit, die Gesamtlänge der Wasserwaage zu veriieren, indem auf das Gelenkstück 1 Arme 9 mit unterschiedlicher Länge aufgesteckt werden. Lange Arme 9 können beispielsweise dann notwendig sein, wenn ein Rahmen oder eine andere Ebene, welche nicht durchgehend ist, adjustiert werden muß. Die Arme 9 überbrücken dann die offenen Abschnitte.

Eine Vielzahl herkömmlicher, stabförmiger Wasserwaagen 28 ist bereits in Gebrauch. Die vorgeschlagene Wasserwaage der zweiten Ausführungsform weist den besonderen Vorteil auf, daß sie die Weiterverwendung herkömmlicher Wasserwaagen 28 ermöglicht.

Der besondere Vorteil der Wasserwaage der dritten Ausführungsform besteht schließlich in ihrer einfachen Konstruktion. Entsprechend niedrig sind auch ihre Herstellungskosten.

## Patentansprüche

1. Wasserwaage mit einem Paar um eine Drehachse (8) gegeneinander verschwenkbarer, langgestreckter und eine Meßeinrichtung (10, 12) aufweisender Arme (1, 2, 9) zum Aufsetzen auf eine Ebene und zum Erfassen einer Neigung derselben, wobei jeder der Arme (1,2,9) einen ersten (9) und einen zweiten (9) Längsabschnitt mit einer diese verbindenden, starren Kröpfung (1) aufweist,
eine Längsachse des ersten Längsabschnittes eines jeden Armes in einem Abstand parallel und in einer Ebene von einer Längsachse der zugehörigen zweiten Längsabschnittes fortgesetzt wird,
die Drehachse (8) in den Bereichen der starren Kröpfung (1) beiden Arme (1, 2, 9) verläuft,
die ersten Längsabschnitte (9) beider Arme eine i.w. gleiche erste Länge und die zweiten Längsabschnitte (9) beider Arme eine i.w. gleiche zweite Länge besitzen, dadurch gekennzeichnet, daß die Arme so ausgebildet sind, daß sichergestellt ist, daß sowohl in einem zusammengelegten Zustand als auch bei jedem Verschwenkungswinkel zwischen den Armen stets durchgehender Kontakt mit der Ebene herrscht.

2. Wasserwaage nach Anspruch 1, dadurch gekennzeichnet, daß die erste Länge i.w. gleich der zweiten Länge ist.

3. Wasserwaage nach Anspruch 1 oder 2, dadurch gekennzeichnet, daß der erste (9) und der zweite (9) Längsabschnitt beider Arme eine i.w. gleiche Breite bezogen auf die Ebene aufweist, und der Abstand der Längsachsen dieser Breite entspricht.

4. Wasserwaage nach einem der Ansprüche 1 bis 3, dadurch gekennzeichnet, daß die Arme in den Bereichen der Kröpfung (1) jeweils eine Ausnehmung (3) aufweisen, die in einer bezogen auf die Ebene vertikalen Richtung vorgesehen und so ausgebildet ist, daß die Arme ineinander steckbar sind, wobei die Ausnehmung (3) eines Armes die Kröpfung (1) des jeweils anderen Armes aufnimmt.

5. Wasserwaage nach Anspruch 4, dadurch gekennzeichnet, daß die Drehachse durch ein Achsenelement (8) realisiert ist und ein zentrales Gelenk ausbildet, das beide Arme im ineinandergesteckten Zustand, sich durch einen Mittelpunkt der jeweiligen Kröpfung (1) erstreckend, verbindet.

6. Wasserwaage nach einem der Ansprüche 1 bis 5, dadurch gekennzeichnet, daß beide Arme (1, 2, 9) dieselbe äußere Form aufweisen.

7. Wasserwaage nach einem der Ansprüche 1 bis 6, dadurch gekennzeichnet, daß für jeden der Arme der erste Längsabschnitt (9), die Kröpfung (1) und der zweite Längsabschnitt (9) einstückig ausgebildet sind.

8. Wasserwaage nach einem der Ansprüche 1 bis 6, dadurch gekennzeichnet, daß mindestens einer der Arme entlang seiner Längsrichtung teilbar ausgebildet und in eine solche Teilung ein Verlängerungsstück (17) einsetzbar ist.

9. Wasserwaage nach einem der Ansprüche 1 bis 8, dadurch gekennzeichnet, daß mindestens ein Arm endseitig eine Einrichtung (27) zum Befestigen einer den betreffenden Längsabschnitt (9) des Armes (1, 2, 9) verlängernden herkömmlichen Wasserwaage (28) aufweist.

10. Wasserwaage nach einem der Ansprüche 1 bis 9, dadurch gekennzeichnet, daß querschnittlich die Arme jeweils im Bereich des ersten und zweiten Längsabschnittes als U- bzw. als doppeltes T-Profil ausgebildet und durch ein Druckgußverfahren hergestellt sind.

11. Wasserwaage nach einem der Ansprüche 1 bis 10, dadurch gekennzeichnet, daß die Arme an vorbestimmten Stellen mit horizontalen und/oder senkrechten Aussparungen versehen sind, die zum Einsetzen von Libellenelementen (10) eingerichtet sind.

12. Wasserwaage nach einem der Ansprüche 1 bis 11, gekennzeichnet durch eine um die Drehachse (8) herum gebildete, im aufgesetzten Zustand ablesbare Winkelmeßeinrichtung (15) zum Erfassen eines Winkels zwischen den gegeneinander verschwenkten Armen in der Ebene.

13. Wasserwaage nach einem der Ansprüche 1 bis 12, gekennzeichnet durch eine im Bereich der Drehachse vorgesehene Einrichtung zum rastenden Arretieren der gegeneinander verschwenkten Arme in mindestens einem vorbestimmten Winkel.

14. Wasserwaage nach einem der Ansprüche 1 bis 13, gekennzeichnet durch eine im Bereich der Drehachse vorgesehene Dosenlibelle (12).

## Claims

1. Spirit level comprising a pair of elongated arms (1, 2, 9) pivotable relative to one another about an axis of rotation (8) and having a measuring device (10, 12) for placing on a plane and detecting an inclination thereof, each of the arms (1, 2, 9) having a first (9) and a second (9) longitudinal portion with a rigid bent portion (1) connecting them, a longitudinal axis of the first longitudinal portion of each arm being continued at a distance parallel to and in a plane of a longitudinal axis of the associated second longitudinal portion, the axis of rotation (8) extending into the regions of the rigid bent portion (1) of both arms (1, 2, 9), the first longitudinal portions (9) of both arms having a substantially identical first length and the second longitudinal portions (9) of both arms having a substantially identical second length, characterised in that the arms are designed so as to ensure that there is always continuous contact with the plane both in a folded state and at any pivot angle between the arms.

2. Spirit level according to claim 1, characterised in that the first length is substantially identical to the second length.

3. Spirit level according to claim 1 or claim 2, characterised in that the first (9) and the second (9) longitudinal portions of both arms have a substantially identical width in relation to the plane and the distance between the longitudinal axes corresponds to this width.

4. Spirit level according to one of claims 1 to 3, characterised in that the arms are each provided in the regions of the bent portion (1) with a recess (3) which is provided in a vertical direction in relation to the plane and is designed in such a manner that the arms can be fitted one into the other, the recess (3) of one arm receiving the bent portion (1) of the respective other arm.

5. Spirit level according to claim 4, characterised in that the axis of rotation is produced by an axial element (8) and forms a central hinge which connects both arms when they are fitted one into the other, extending through a centre point of the respective bent portion (1).

6. Spirit level according to one of claims 1 to 5, characterised in that both arms (1, 2, 9) have the same external shape.

7. Spirit level according to one of claims 1 to 6, characterised in that the first longitudinal portion (9), the bent portion (1) and the second longitudinal portion (9) are formed in one piece for each of the arms.

8. Spirit level according to one of claims 1 to 6, characterised in that at least one of the arms can be divided along its longitudinal direction and an extension piece (17) can be inserted into a division of this kind.

9. Spirit level according to one of claims 1 to 8, characterised in that at least one arm is provided at its end with a device (27) for securing a conventional spirit level (28) extending the relevant longitudinal portion (9) of the arm (1, 2, 9).

10. Spirit level according to one of claims 1 to 9, characterised in that, in cross section, the arms are each in the form of a U-shaped or double T-shaped profile in the region of the first and second longitudinal portions and are produced by die casting.

11. Spirit level according to one of claims 1 to 10, characterised in that the arms are provided at predetermined points with horizontal and/or vertical recesses adapted for the insertion of bubble elements (10).

12. Spirit level according to one of claims 1 to 11, characterised by an angle-measuring device (15) which is formed around the axis of rotation (8) and can be read when placed on a plane for detecting an angle between the arms pivoted relative to one another in the plane.

13. Spirit level according to one of claims 1 to 12, characterised by a device provided in the region of the axis of rotation for locking the arms pivoted relative to one another at at least one predetermined angle.

14. Spirit level according to one of claims 1 to 13, characterised by a circular bubble (12) provided in the region of the axis of rotation.

## Revendications

1. Niveau à bulle, comportant une paire de bras (1, 2, 9) susceptibles de pivoter l'un par rapport à l'autre autour d'un axe de rotation (8), allongés et présentant un dispositif de mesure (10,12), à poser sur un plan et pour appréhender une inclinaison de celui-ci, chacun des bras (1, 2, 9) présentant un premier (9) et un deuxième (9) tronçon longitudinal, avec un coudage (1) rigide, reliant ceux-ci,
un axe longitudinal du premier tronçon longitudinal de chaque bras étant prolongé à distance parallèlement à et dans un plan vis à vis d'un axe longitudinal du deuxième tronçon longitudinal afférent,
l'axe de rotation (8) s'étendant dans les zones du coudage (1) rigide des deux bras (1, 2, 9),
les premiers tronçons longitudinaux (9) des deux bras présentant une première longueur sensiblement identique et les deuxièmes tronçons longitudinaux (9) des deux bras présentant une deuxième longueur sensiblement identique, caractérisé en ce que les bras sont réalisés de manière à ce que soit assuré que règne avec le plan un contact toujours continu, tant à l'état regroupé qu'également pour tout angle de pivotement entre les bras.

2. Niveau à bulle selon la revendication 1, caractérisé en ce que la première longueur est sensiblement égale à la deuxième longueur.

3. Niveau à bulle selon la revendication 1 ou 2, caractérisé en ce que le premier tronçon longitudinal (9) et le deuxième tronçon longitudinal (9) des deux bras présentent une largeur sensiblement identique par rapport au plan et l'espacement entre les axes longitudinaux correspondant à cette largeur.

4. Niveau à bulle selon l'une des revendications 1 à 3, caractérisé en ce que les bras présentent chacun dans les zones du coudage (1) un évidement (3) qui est prévu dans une direction verticale par rapport au plan et est réalisé de manière que les bras puissent être emboîtés les uns dans les autres, l'évidement (3) d'un bras recevant le coudage (1) chaque fois de l'autre bras.

5. Niveau à bulle selon la revendication 4, caractérisé en ce que l'axe de rotation est constitué par un élément d'axe (8) et constitue une articulation centrale, qui relie les deux bras à l'état non-emboîté l'un dans l'autre, en passant par un centre du coudage (1) respectif.

6. Niveau à bulle selon l'une des revendications 1 à 5, caractérisé en ce que les deux bras (1, 2, 9) ont la même forme extérieure.

7. Niveau à bulle selon l'une des revendications 1 à 6, caractérisé en ce que, pour chacun des bras, le premier tronçon longitudinal (9), le coudage (1) et le deuxième tronçon longitudinal (9) sont réalisés d'une seule pièce.

8. Niveau à bulle selon l'une des revendications 1 à 6, caractérisé en ce qu'au moins l'un des bras est réalisé de façon à pouvoir être divisé le long de sa direction longitudinale et une pièce de prolongement (17) étant susceptible d'être insérée dans une telle division.

9. Niveau à bulle selon l'une des revendications 1 à 8, caractérisé en ce qu'au moins un bras présente à une extrémité un dispositif (27) destiné à fixer un niveau à bulle (28) classique, prolongeant le tronçon longitudinal (9) concerné du bras (1,2,9).

10. Niveau à bulle selon l'une des revendications 1 à 9, caractérisé en ce qu'en section transversale, les bras sont réalisés chaque fois dans la zone du premier et du deuxième tronçon longitudinal sous la forme de profilés en U ou de profilés en T doubles et sont fabriqués par un procédé de moulage sous pression.

11. Niveau à bulle selon l'une des revendications 1 à 10, caractérisé en ce que les bras sont dotés, en des emplacements prédéterminés, d'évidements horizontaux et/ou verticaux qui sont équipés pour recevoir des éléments de nivelle (10).

12. Niveau à bulle selon l'une des revendications 1 à 11, caractérisé par un dispositif de mesure d'angle (15) constitué autour de l'axe de rotation (8), pouvant être lu à l'état posé, pour appréhender un angle défini entre les bras pivotés l'un par rapport à l'autre, dans le plan.

13. Niveau à bulle selon l'une des revendications 1 à 12, caractérisé par un dispositif prévu dans la zone de l'axe de rotation, permettant de bloquer avec un effet d'encliquetage les bras mutuellement pivotés en au moins un angle prédéterminé.

14. Niveau à bulle selon l'une des revendications 1 à 13, caractérisé par une nivelle capsule (12) prévue dans la zone de l'axe de rotation.
